# EUROPÄISCHE PATENTSCHRIFT

(11) **EP 1 517 941 B1**
(45) Veröffentlichungstag und Bekanntmachung des Hinweises auf die Patenterteilung: **21.12.2005**
(21) Anmeldenummer: 03738053.2
(22) Anmeldetag: 18.06.2003
(51) Int. Cl.: C08G 65/30

(54) **VERFAHREN ZUR AUFARBEITUNG VON POLYETHERALKOHOLEN**
METHOD FOR THE PREPARATION OF POLYETHER ALCOHOLS
PROCEDE DE PREPARATION D'ALCOOLS DE POLYETHER

(30) Priorität: 20.06.2002 DE 10227655
(43) Veröffentlichungstag der Anmeldung: 30.03.2005
(73) Patentinhaber: BASF Aktiengesellschaft, 67056 Ludwigshafen (DE)
(72) Erfinder: ZIELER, Ralf, 01994 Meuro (DE); GROTH, Iris, 01987 Schwarzheide (DE); BUSS, Christian, 01129 Dresden (DE); WETTERLING, Monika, 01968 Senftenberg (DE)
(86) Internationale Anmeldenummer: PCT/EP2003/006405
(87) Internationale Veröffentlichungsnummer: WO 2004/000914

(56) Entgegenhaltungen:
- DE-A- 4 209 359
- US-A- 4 306 943
- US-A- 4 507 475
- DATABASE WPI Derwent Publications Ltd., London, GB; AN 1976-80090X XP002254810 & JP 51 101098 A (ASAHI DENKA KOGYO KK) 7. September 1976 (1976-09-07)

## Beschreibung

Die Erfindung betrifft ein Verfahren zur Aufarbeitung von Polyetheralkoholen, die durch basisch katalysierte Anlagerung von Alkylenoxiden an H-funktionelle Startsubstanzen hergestellt werden können.

Die Herstellung von Polyetheralkoholen durch Umsetzung von H-funktionellen Startsubstanzen, insbesondere Alkoholen und primären und/oder sekundären Aminen mit Alkylenoxiden ist allgemein bekannt. Die Umsetzung der Alkylenoxide mit den H-funktionellen Startsubstanzen erfolgt üblicherweise in Gegenwart von Katalysatoren, beispielsweise basischen oder sauren Substanzen oder Multimetallcyanidkatalysatoren. Zumeist wird als Katalysator Kaliumhydroxid eingesetzt, das nach der Synthese durch Reinigungsoperationen wie Neutralisation, Destillation, Filtration vom Polyetheralkohol abgetrennt wird. Erst diese reinen Polyetherpolyole werden zur Umsetzung mit den Di- und/oder Polyisocyanaten verwendet.

Die Aufarbeitung kann beispielsweise durch Zusatz von festen Verbindungen mit sauren Zentren, wie Ionenaustauschern oder Alumosilikaten, zum Polyetheralkohol und deren anschließende Abtrennung, beispielsweise mittels Filtration oder mittels Zentrifugation, erfolgen. Auf Grund der geringen Wirksamkeit dieser Verbindungen muß jedoch eine große Menge an derartigen Verbindungen zugesetzt und anschließend wieder abgetrennt werden.

Eine weitere Möglichkeit zur Aufarbeitung ist die Neutralisation der basischen Katalysatoren mittels einer Säure und Abtrennung der entstandenen Salze mittels eines geeigneten Trennverfahrens, beispielsweise mittels Filtration oder mittels Zentrifugation.

Aus dem Stand der Technik sind eine Reihe von Verfahren zur Aufarbeitung von Polyetheralkoholen unter Verwendung von Säuren bekannt.

Problematisch beim Einsatz von Säuren als Neutralisationsmittel ist insbesondere die Einstellung des Neutralpunkts.

So beschreibt US-A-3,016,404 die Verwendung von Salzsäure als Neutralisationsmittel, wobei die Salzsäure im Überschuß zugegeben und der Überschuß als Chlorwasserstoff abgestrippt wird. Die Verwendung von Salzsäure setzt jedoch wegen ihrer korrodierenden Wirkung hohe Ansprüche an die eingesetzten Apparate. Außerdem kommt es bei diesem Verfahren zur Freisetzung von gasförmigen Chlorwasserstoff, was sicherheitstechnisch bedenklich ist.

Bei mehrfunktionellen Säuren, wie Schwefelsäure oder Phosphorsäure, ist auf Grund der Mehrfachdissoziation der Säuren die Einstellung des Neutralpunkts noch wesentlich schwieriger möglich.

Zur Lösung dieses Problems wird in DE-A-32 29 216 vorgeschlagen, Phosphorsäure in Kombination mit einem Adsorptionsmittel einzusetzen. Als Adsorptionsmittel werden insbesondere natürliche oder synthetische Silikate verwendet. Dieses Verfahren ist jedoch unsicher in Bezug auf die Einstellung des Neutralpunkts. Außerdem kann es, insbesondere bei Polyetheralkoholen mit einem hohen Gehalt an Ethylenoxid, zur Ausbildung von unfiltrierbaren Kristalltrübungen und zum Herauslösen von unerwünschten Metallionen aus den Silikaten kommen.

In DE-A-14 95 719 wird die Reinigung von Polyetheralkoholen mittels Phosphorsäure beschrieben, wobei die Abtrennung des Wassers und der Salze bei einem genau definierten Verlauf des Drucks und der Temperatur erfolgt. Dabei werden vorzugsweise organische Lösungsmittel eingesetzt. Dieses Verfahren ist jedoch umständlich und führt bei Polyetheralkoholen mit einem hohen Anteil von Ethylenoxid in der Kette zu Trübungen im Polyetheralkohol.

In WO 99/47582 wird ein Verfahren zur Herstellung von geruchsarmen Polyetheralkoholen beschrieben. Dabei wird der neutralisierte oder unneutralisierte Polyetheralkohol mit einer Säure in Kontakt gebracht und anschließend Wasser unter Hydrolysebedingungen zugesetzt. Dabei ist es möglich, die Säure im Überschuß zuzugeben. Die überschüssige Säure kann anschließend mit alkalischen Verbindungen, insbesondere mit Laugen, neutralisiert werden. Die gebildeten Salze werden mittels Filtration abgetrennt. Auch bei diesem Verfahren kommt es, insbesondere bei der Reinigung von Polyetheralkoholen mit einem hohen Gehalt an Ethylenoxid in der Kette, zu Kristalltrübungen und, damit verbunden, zu Schwierigkeiten bei der Abtrennung der Salze aus dem Polyetheralkohol. Durch den bei der Hydrolyse der im Polyetheralkohol vorhandenen Geruchsträger notwendigen Säureüberschuss und die das dadurch notwendige nochmalige Zugeben von alkalischen Verbindungen zur Reneutralisation der überschüssigen Säure ist die Einstellung der Alkalität, das heißt. der Gehalte an Kalium- und Natriumionen im Polyetheralkohol, sehr schwierig.

In US 4,507,475 wird ein Verfahren zur Reinigung von Polyetheralkoholen beschrieben, bei dem der Polyetheralkohol mit Wasser und Phosphorsäure versetzt, ein Adsorptionsmittel zugesetzt und diese Mischung filtriert wird.

Polyetheralkohole mit einem hohen Gehalt an Ethylenoxid, insbesondere mit einem Gehalt an Ethylenoxid von größer 20, vorzugsweise größer 25, besonders bevorzugt größer 35 und insbesondere größer 50 Gew.-%, bezogen auf das Gewicht des Polyetheralkohols, werden vorzugsweise zur Herstellung von Polyurethan-Weichschaumstoffen, insbesondere Kaltformschaumstoffen, eingesetzt. Das Ethylenoxid kann dabei über die gesamte Polyetherkette verteilt sein. Bei Polyetheralkoholen, die für die Herstellung von Kaltformschaumstoffen bestimmt sind, erfolgt die Anlagerung vorzugsweise zumindest eines Teils des Ethylenoxids am Kettenende.

Polyetheralkohole mit einem hohen Anteil an Ethylenoxid in der Kette sind sehr hydrophil und erschweren dadurch ebenfalls die übliche Aufarbeitung. Insbesondere durch die ungünstige Löslichkeit der nach der Neutralisation gebildeten Salze im Polyetheralkohol wird die Reinigung erschwert, und es kann zu einem unerwünscht hohen Gehalt an Alkalimetallionen im fertigen Polyetheralkohol kommen.

Aufgabe der Erfindung war es, ein Verfahren zur Aufarbeitung von Polyetheralkoholen, insbesondere solchen, die durch basisch katalysierte Anlagerung Ethylenoxid und Propylenoxid, an H-funktionelle Startsubstanzen hergestellt wurden und einen Anteil an Ethylenoxid in der Polyetherkette von mindestens 20 Gew.-%, bezogen auf das Gewicht der eingesetzten Alkylenoxide, aufweisen, ohne daß es zu Trübungen und einem unerwünscht hohen Anteil an Feinstkorn bei den Salzkristallen kommt und bei dem eine weitgehend vollständige Abtrennung der Alkalimetallionen aus dem Polyetheralkohol erfolgt.

Bei der Neutralisation wird die zur Neutralisation des Alkalimetallhydroxids benötigte Menge an Säure, beispielsweise Phosphorsäure, auf die Bildung von primären Salzen, das heißt solchen mit einem Metallion, bezogen. Ziel ist es, mit dieser Menge an Säure den größten Teil der Salze zu bilden, da sich diese, insbesondere bei Phosphaten, am leichtesten vom Polyetheralkohol abtrennen lassen. Hierbei ist zumeist nur bei einem bestimmten Bereich des pH-Werts, im Falle der Phosphorsäure von 6 bis 7, die Bildung von gut filtrierbaren Salzen sichergestellt. Diese Einstellung gestaltet sich in der Praxis zumeist als schwierig und ist mit einem enormen Zeitaufwand verbunden.

Die Aufgabe der Erfindung konnte überraschenderweise gelöst werden, indem bei der Reinigung der Polyetheralkohole als Säure Phosphorsäure verwendet und die Neutralisation in Gegenwart von Absorptionsmittel, wie Cellulose, aktiven Erden, Ionenaustauchern und/oder Bentoniten durchgeführt und bei der abschließenden Abtrennung von Wasser und leicht flüchtigen Substanzen dem Polyetheralkohol eine basische Verbindung zugesetzt wird.

Gegenstand der Erfindung ist demzufolge ein Verfahren zur Aufarbeitung von Polyetheralkoholen, die durch basisch katalysierte Anlagerung von Ethylenoxid und Propylenoxid an H-funktionelle Startsubstanzen hergestellt wurden und die einen Anteil an Ethylenoxid in der Polyetherkette von größer 20, vorzugsweise größer 25, besonders bevorzugt größer 35 und insbesondere größer 50 Gew.-%, bezogen auf das Gewicht der eingesetzten Alkylenoxide, aufweisen, umfassend die Schritte
a) im Anschluss an die Anlagerung der Alkylenoxide Neutralisation des Polyetheralkohols mit einer Säure,
b) Zusatz mindestens eines Absorptionsmittels,
c) Entfernen von Wasser und leicht flüchtigen Verbindungen aus dem Polyetheralkohol,
d) Entfernung der gebildeten Salze und der Absorptionsmittel aus dem Polyetheralkohol,
dadurch gekennzeichnet, dass als Säure in Schritt a) Phosphorsäure, vorzugsweise mit einer Konzentration im Bereich zwischen 80 bis 85 %, in einer Menge von 56 bis 98 % der stöchiometrischen Menge eingesetzt, das Absoptionsmittel in Schritt b) in einer Menge von 0,05 bis 5 Gew.-%, bezogen auf den Polyetheralkohol, eingesetzt wird, und im Verlaufe von Schritt c) dem Polyetheralkohol mindestens ein Alkalimetallhydroxid, Erdalkalimetallhydroxyd und oder Amin in einer Menge von 0,001 bis 0,5 % der stöchiometrischen Menge zugesetzt wird.

Das Absorptionsmittel in Schritt b) ist vorzugsweise ausgewählt aus der Gruppe, enthaltend Cellulose, gegebenenfalls aktive Erden, Ionenaustauscher, Bentonite und Silikate.

Die Schritte a) und b) können dabei gleichzeitig vorgenommen werden. Es ist jedoch auch möglich, die erfindungsgemäße Aufarbeitung mit Schritt a) oder Schritt b) zu beginnen. Unter dem Begriff "stöchiometrische Menge" wird in dieser Erfindung verstanden, daß auf ein Mol Alkalimetallhydroxid ein Mol Phosphorsäure kommt.

Vorzugsweise wird der Polyetheralkohol vor dem Zusatz der Phosphorsäure mit Wasser versetzt, insbesondere in einer Menge im Bereich zwischen 1 und 20 Gew.-%, bezogen auf das Gewicht des Polyetheralkohols.

Die Neutralisation in Schritt a) wird vorzugsweise bei einer Temperatur im Bereich zwischen 60 und 130°C durchgeführt. Dabei sollte im Reaktor eine Beschleierung mit einem Inertgas, insbesondere Stickstoff, erfolgen. Die Neutralisation verläuft im allgemeinen in einer Zeit zwischen 1 und 4 Stunden.

Die abschließende Entfernung von Wasser, im allgemeinen bis zu einem Wassergehalt von <0,1 %, und leicht flüchtigen Bestandteilen aus dem Polyetheralkohol erfolgt vorzugsweise durch Destillation, insbesondere unter Vakuum, oder durch Strippen mit einem Inertgas, vorzugsweise Stickstoff. Diese Behandlung wird vorzugsweise bei einer Temperatur im Bereich zwischen 100 und 130°C durchgeführt.

Die Zugabe des Alkalimetallhydroxids, Erdalkalimetalls oder Amins in Schritt c) erfolgt vorzugsweise bei einem Wassergehalt im Polyether im Bereich zwischen 0,1 und 0,5 Gew.-%. Dabei können die Bedingungen für das Strippen vor, während und nach der Zugabe des Alkalimetallhydroxids prinzipiell gleich bleiben oder geändert werden.

Die als Absorptionsmittel eingesetzte Cellulose hat vorzugsweise einen Faserdurchmesser im Bereich von 3 nm und 1 µm. Es handelt sich meist um weiße lose Fasern bzw. weiße Kurzfasern mit einem Trockengehalt von 90 bis 95 %, und die Cellulose ist vorzugsweise hochrein und extraktfrei und hat ein Schüttgewicht zwischen 20 bis 200 g/l. Die Abtrennung der gebildeten Salze in Schritt d) erfolgt insbesondere mittels Filtration. Dabei kann gegebenenfalls ein Filterhilfsmittel verwendet werden. Als Filterhilfsmittel kann insbesondere Cellulose verwendet werden. Prinzipiell kann die gleiche Cellulose, die als Absorptionsmittel eingesetzt wurde, auch als Filterhilfsmittel eingesetzt werden.

Nach dem erfindungsgemäßen Verfahren können insbesondere Polyetheralkohole für die Herstellung von Polyurethan-Weichschaumstoffen und Polyurethan-Hartschaumstoffen hergestellt werden. Wie bereits ausgeführt, werden die nach dem erfindungsgemäßen Verfahren aufbereiteten Polyetheralkohole mit hohem Gehalt an Ethylenoxid insbesondere zur Herstellung von Polyurethan-Weichschaumstoffen eingesetzt.

Bei der Herstellung von Polyetheralkoholen, die für die Herstellung von Polyurethan-Weichschaumstoffen eingesetzt werden, werden als Startsubstanzen zumeist Alkohole mit 2 oder 3 Hydroxylgruppen eingesetzt. Bevorzugte Startsubstanzen sind Glyzerin, Trimethylolpropan, Ethylenglykol, Diethylenglykol, Propylenglykol, Dipropylenglykol sowie beliebige Mischungen aus mindestens zwei der genannten Alkohole. Als Alkylenoxide werden Ethylenoxid und Propylenoxid gemeinsam eingesetzt. Dabei können die Alkylenoxide einzeln hintereinander in sogenannten Blöcken oder gemischt miteinander als sogenannte Statistik angelagert werden. Für bestimmte Einsatzgebiete, beispielsweise für die Herstellung von Kaltformschäumen, kann am Ende der Polyetherkette ein Ethylenoxidblock angelagert werden. Die Polyetheralkohole, die für die Herstellung von Polyurethan-Weichschaumstoffen eingesetzt werden, haben üblicherweise ein Molekulargewicht Mₙ im Bereich zwischen 1000 und 10000, insbesondere 1000 bis 7000 g/mol.

Bei Polyetheralkoholen, die bei der Herstellung von Polyurethan-Hartschaumstoffen eingesetzt werden, werden zumeist Startsubstanzen mit mindestens 4 aktiven Wasserstoffatomen eingesetzt, vorzugsweise mindestens 4-wertige Alkohole und/oder Amine mit mindestens 4 reaktiven Wasserstoffatomen. Es können sowohl aliphatische als auch aromatische Amine eingesetzt werden. Bevorzugt sind aromatische Amine.

Beispiele für mindestens 4-wertige Alkohole sind Zuckeralkohole, wie Glucose, Sorbit, Saccharose, Mannit. Da diese Verbindungen zumeist fest sind, erfolgt ihre Umsetzung mit den Alkylenoxiden zumeist im Gemisch mit flüssigen Verbindungen, wie Wasser, Glyzerin und/oder Ethylenglykol. Es ist bei dem erfindungsgemäßen Verfahren prinzipiell auch möglich, als Startsubstanz Mischungen aus den genannten festen Verbindungen und den erfindungsgemäß eingesetzten Aminen zu verwenden.

Als aromatische Amine werden zumeist Toluylendiamin, Diphenylmethandiamin und Gemische aus Diphenylmethandiamin und Polyphenylenpolymethylenpolyaminen verwendet. Als aliphatische Amine werden zumeist Ethylendiamin, Diethylentriamin, Dimethylpropylamin oder deren höhere Homologe verwendet.

Zu Beginn der Umsetzung wird der basische Katalysator, der vorzugsweise in einer Menge von 0,05 bis 0,5 Gew.-%, vorzugsweise 0,1 bis 0,3 Gew.-%, bezogen auf das Gewicht des Polyetheralkohols eingesetzt wird, mit der Startsubstanz gemischt und die entstandene Mischung gegebenenfalls einer Destillation zur Entfernung von Wasser und leicht flüchtigen Bestandteilen unterworfen. Danach erfolgt die Dosierung der Alkylenoxide.

Die Umsetzung der Startsubstanz mit den Alkylenoxiden wird bei den hierfür üblichen Drücken im Bereich zwischen 0,1 und 1,0 MPa und den üblichen Temperaturen im Bereich zwischen 80 und 140°C durchgeführt. An die Dosierung der Alkylenoxide schließt sich zumeist eine Nachreaktionsphase zum vollständigen Abreagieren der Alkylenoxide an. In einer vorteilhaften Ausführungsfoxm des erfindungsgemäßen Verfahrens wird zu Beginn der Nachreaktionsphase, vorzugsweise unmittelbar nach Abschluss der Dosierung der Alkylenoxide, der Reaktionsmischung nochmals Katalysator zugesetzt.

Nach der Anlagerung der Alkylenoxide, werden die Polyetheralkohole nach dem erfindungsgemäßen Verfahren vom Katalysator befreit.

Danach werden dem Polyetheralkohol zumeist die üblichen Stabilisatoren in den hierfür üblichen Mengen zugesetzt.

Die nach dem erfindungsgemäßen Verfahren aufgearbeiteten Polyetheralkohole werden zumeist zur Herstellung von Polyurethanen eingesetzt. Dazu werden sie mit Polyisocyanaten, vorzugsweise in Anwesenheit von Katalysatoren sowie, im Falle der Herstellung von Polyurethan-Schaumstoffen, von Treibmitteln, und gegebenenfalls üblichen und bekannten Hilfs- und/oder Zusatzstoffen, umgesetzt.

Durch das erfindungsgemäße Verfahren zur Aufarbeitung der Polyetheralkohole ist es überraschenderweise möglich, Polyetheralkohole mit einem hohen Gehalt an Ethylenoxid in der Polyetherkette zu neutralisieren, ohne daß es zu Trübungserscheinungen kommt, sowie ohne Probleme bei der Einstellung des pH-Werts zu reinigen. Es treten auch keine Probleme mit nicht filtrierbaren Anteilen an sehr feinkörnigen Salzen auf.

Die durch das erfindungsgemäße Verfahren aufgearbeiteten Polyetheralkohole zeichnen sich durch niedrige Restsalzgehalte und eine niedrige Säurezahl aus. So kann ein Kaliumwert von maximal 10 mg K/kg und eine Säurezahl von maximal 0,03 mg KOH/g erreicht werden.

Die Verwendung der nach dem erfindungsgemäßen Verfahren aufgearbeiteten Polyetheralkohole erfolgt vorzugsweise zur Herstellung von Polyurethanen. Dazu werden die Polyetheralkohole, gegebenenfalls im Beisein von Katalysatoren, Treibmitteln sowie üblichen Hilfs- und Zusatzstoffen, mit Polyisocyanaten umgesetzt.

Vorzugsweise erfolgt der Einsatz der Polyetheralkohole mit den hohen Gehalten an Ethylenoxid zur Herstellung von Polyurethan-Weichschaumstoffen, insbesondere Formschaumstoffen und bevorzugt Kaltformschaumstoffen. Insbesondere als Zellöffner in derartigen Schaumstoffen sind sie sehr gut geeignet.

Das Verfahren soll an folgenden Beispielen näher erläutert werden:

### Vergleichsbeispiel 1

1 Kg eines alkalischen Rohpolyetheralkohols auf Basis von Glycerin und einem Gemisch aus Propylenoxid und Ethylenoxid mit einem Ethylenoxid-Anteil von 35 % Gewichtsanteil und einem Ethylenendblock von 25 % Gewichtsanteil, einer OH-Zahl von 45 mg KOH/g und einer Alkalität von 0,3 Gewichtsprozent KOH, bezogen auf den Rohpolyether, wurde mit 80 g Wasser und 5,95 g 80 %iger Phosphorsäure versetzt und unter Stickstoffbesclileierung 2 h bei-90°C gerührt, wobei eine Kristalltrübe auftrat. Auch nach der nachfolgenden Vakuumdestillation bei 120°C und anschließender Filtration blieb die Trübung erhalten. Das Fertigprodukt hatte einen Wassergehalt von 0,08 Gew.-%, einen pH-Wert von 7,5 und einen Kaliumwert von 80 mg K/kg.

### Vergleichsbeispiel 2

1 Kg eines alkalischen Rohpolyetheralkohols auf Basis von Glycerin und einem Gemisch aus Propylenoxid und Ethylenoxid mit einem Ethylenoxid-Anteil von 60 % Gewichtsanteil und einem Ethylenendblock von 22 % Gewichtsanteil, einer OH-Zahl von 38 mg KOH/g und einer Alkalität von 0,15 Gew.-% KOH, bezogen auf den Rohpolyether wurde mit 40 g Wasser und 1,96 g 80 %iger Phosphorsäure versetzt und unter Stickstoffbeschleierung 2h bei 90°C gerührt, wobei eine Kristalltrübe auftrat. Auch nach der nachfolgenden Vakuumdestillation bei 120°C und anschließender Filtration blieb die Trübung erhalten. Das Fertigprodukt hatte einen Wassergehalt von 0,05 Gew.-%, einen pH-Wert von 8,5 und einen Kaliumwert von 200 mg K/kg.

### Vergleichsbeispiel 3

1 Kg eines alkalischen Rohpolyetheralkohols auf Basis von Glycerin und einem Gemisch aus Propylenoxid und Ethylenoxid mit einem Ethylenoxid-Anteil von 55 % Gewichtsanteil und einem Ethylenendblock von 15 % Gewichtsanteil, einer OH-Zahl von 45 mg KOH/g und einer Alkalität von 0,5 Gew.-% KOH, bezogen auf den Rohpolyether, wurde mit 90 g Wasser und 10,8 g 80 %iger Phosphorsäure versetzt und unter Stickstoffbeschleierung 2 h bei 90°C gerührt, wobei eine Kristalltrübe auftrat. Nach der Neutralisation wurden 10 g kolloidales Mangnesiumsilikat Ambosol® der Firma Ambozel zugesetzt. Auch nach der nachfolgenden Vakuumdestillation bei 120°C und anschließender Filtration blieb die Trübung erhalten. Das Fertigprodukt hatte einen Wassergehalt von 0,08 Gew.-%, einen pH-Wert von 7,5 und einen Kaliumwert von 22 mg K/kg.

### Ausführungsbeispiel 1

1 Kg eines alkalischen Rohpolyetheralkohols auf Basis von Glycerin und einem Gemisch aus Propylenoxid und Ethylenoxid mit einem Ethylenoxid-Anteil von 35 % Gewichtsanteil und einem Ethylenendblock von 25 % Gewichtsanteil, einer OH-Zahl von 45 mg KOH/g und einer Alkalität von 0,3 Gew.-% KOH, bezogen auf den Rohpolyether wurde mit 80 g Wasser und 1 g Arbocel von der Qualität weiße kurze Faser einer Schüttdichte von 160 g/1 und einer Restfeuchte von 5 % danach 5,95 g 80 %iger Phosphorsäure versetzt und unter Stickstoffbeschleierung 2 h bei 90°C gerührt. Es trat hier eine geringe Kristalltrübe auf.

Nach der Wasserentfernung auf 0,1 % mittels Vakuumdestillation Bedingungen wie Vergleichsbeispiel 1 wurden 0,04 g 48 %ige KOH zugegeben. Nach Zugabe KOH und Fortsetzung der Vakuumdestillation bis zum Wassergehalt 0,08 Gew.-% war die Kristalltrübe verschwunden. Nach anschließender Filtration hatte das Fertigprodukt einen Wassergehalt von 0,08 Gew.-%, einen pH-wert von 7,5 und eine Kaliumwert von 8 mg K/kg.

### Ausführungsbeispiel 2

1 Kg eines alkalischen Rohpolyetheralkohols auf Basis von Glycerin und einem Gemisch aus Propylenoxid und Ethylenoxid mit einem Ethylenoxid-Anteil von 60 % Gewichtsanteil und einem Ethylenendblock von 22 % Gewichtsanteil, einer OH-Zahl von 38 mg KOH/g und einer Alkalität von 0,15 Gew.-% KOH, bezogen auf den Rohpolyether wurde mit 40 g Wasser und 0,8 g eines Absorbens "Makrosorb MP 5" der Firma Crosfield B. V. mit einem Kaliumhydroxid-Absorptionspotential von 180 mg KOH/g sowie anschließend 1,96 g 80 %iger Phosphorsäure versetzt und unter Stickstoffbeschleierung 2 h bei 90°C gerührt.

Es trat hier eine geringe Kristalltrübe auf.

Nach der Wasserentfernung auf 0,1 % mittels Vakuumdestillation Bedingungen wie Vergleichsbeispiel 2 wurden 0,02 g 48 %ige KOH gegeben. Nach Zugabe der KOH und Fortsetzung der Vakuumdestillation bis zum Wassergehalt 0,05 Gew.-% war die Kristalltrübe verschwunden. Nach anschließender Filtration hatte das Fertigprodukt einen Wassergehalt von 0,05 Gew.-%, einen pH-Wert von 6,5 und einen Kaliumwert von 3 mg K/kg.

### Ausführungsbeispiel 3 (nicht erfindungsgemäß)

1 Kg eines alkalischen Rohpolyetheralkohols auf Basis von Glycerin und einem Gemisch aus Propylenoxid und Ethylenoxid mit einem Ethylenoxid-Anteil von 55 % Gewichtsanteil und einem Ethylenendblock von 15 % Gewichtsanteil, einer OH-Zahl von 45 mg KOH/g und einer Alkalität von 0,5 Gew.-% KOH, bezogen auf den Rohpolyether, wurde mit 90 g Wasser und 10,8 g 80 %iger Phosphorsäure versetzt und unter Stickstoffbeschleierung 2 h bei 90°C gerührt, wobei eine Kristalltrübe auftrat. Nach der Neutralisation wurden 10 g kolloidales Mangnesiumsilikat "Ambosol®" der Firma Ambozel zugesetzt. Auch nach der nachfolgenden Vakuumdestillation bei 120°C und anschließender Filtration blieb die Trübung erhalten.

Nach der Wasserentfernung auf 0,3 % mittels Vakuumdestillation, Bedingungen wie Vergleichsbeispiel 3, wurden 100 g 48 %ige KOH gegeben. Nach Zugabe KOH und Fortsetzung der Vakuumdestillation bis zum Wassergehalt 0,05 Gew.-% war die Kristalltrübe verschwunden. Nach anschließender Filtration hatte das Fertigprodukt einen Wassergehalt von 0,05 Gew.-%, einen pH-Wert von 7,0 und einen Kaliumwert von 7 mg K/kg.

## Patentansprüche

1. Verfahren zur Aufarbeitung von Polyetheralkoholen, die durch basisch katalysierte Anlagerung von Ethylenoxid und Propylenoxid an H-funktionelle Startsubstanzen hergestellt wurden und die einen Anteil an Ethylenoxid in der Polyetherkette von größer 20 Gew.-%, bezogen auf das Gewicht der eingesetzten Alkylenoxide, aufweisen, umfassend die Schritte
a) im Anschluss an die Anlagerung der Alkylenoxide Neutralisation des Polyetheralkohols mit einer Säure,
b) Zusatz mindestens eines Absorptionsmittels,
c) Entfernen von Wasser und leicht flüchtigen Verbindungen aus dem Polyetheralkohol,
d) Entfernung der gebildeten Salze und der Absorptionsmittel aus dem Polyetheralkohol,
**dadurch gekennzeichnet, dass** als Säure in Schritt a) Phosphorsäure in einer Menge von 56 bis 98 % der stöchiometrischen Menge eingesetzt, das Absoptionsmittel in Schritt b) in einer Menge von 0,05 bis 5 Gew.-%, bezogen auf den Polyetheralkohol, eingesetzt wird, und im Verlaufe von Schritt c) dem Polyetheralkohol mindestens ein Alkalimetallhydroxid, Erdalkalimetallhydroxid oder Amin in einer Menge von 0,001 bis 0,5 Gew.-%, bezogen auf das Gewicht des Polyetherols, zugesetzt wird, und wobei das Verfahren mit den Schritten a) und/oder b) begonnen wird.

2. Verfahren nach Anspruch 1, **dadurch gekennzeichnet, dass** das Absorptionsmittel in Schritt b) ausgewählt ist aus der Gruppe, enthaltend Cellulose, Ionenaustauscher, Bentonite und Silikate.

3. Verfahren nach Anspruch 1, **dadurch gekennzeichnet, dass** die Zugabe des Alkalimetallhydroxids, Erdalkalimetallhydroxids. und/oder Amins in Schritt c) vorzugsweise bei einem Wassergehalt im Polyetheralkohol im Bereich zwischen 0,1 und 0,5 Gew.-% erfolgt.

4. Verfahren nach Anspruch 1, **dadurch gekennzeichnet., dass** die Abtrennung der gebildeten Salze in Schritt d) mittels Filtration erfolgt.

5. Verfahren nach Anspruch 4, **dadurch gekennzeichnet, dass** Abtrennung der gebildeten Salze in Schritt d) im Beisein eines Filterhilfsmittels erfolgt.

## Claims

1. A process for the work-up of polyether alcohols which have been prepared by base-catalyzed addition of ethylene oxide and propylene oxide onto H-functional starter substances and have a proportion of ethylene oxide in the polyether chain of greater than 20% by weight, based on the weight of the alkylene oxides used, which comprises the steps
a) neutralization of the polyether alcohol with an acid subsequent to the addition reaction of the alkylene oxides,
b) addition of at least one absorbent,
c) removal of water and volatile compounds from the polyether alcohol,
d) removal of the salts formed and the absorbents from the polyether alcohol,
wherein phosphoric acid is used as acid in step a) in an amount of from 56 to 98% of the stoichiometric amount, the absorbent is used in an amount of from 0.05 to 5% by weight, based on the polyether alcohol, in step b) and at least one alkali metal hydroxide, alkaline earth metal hydroxide or amine is added to the polyether alcohol in an amount of from 0.001 to 0.5% by weight, based on the weight of the polyetherol, during the course of step c) and the process commences with steps a) and/or b).

2. The process according to claim 1, wherein the absorbent in step b) is selected from the group consisting of cellulose, ion exchangers, bentonites and silicates.

3. The process according to claim 1, wherein the addition of the alkali metal hydroxide, alkaline earth metal hydroxide and/or amine in step c) is preferably carried out at a water content in the polyether alcohol in the range from 0.1 to 0.5% by weight.

4. The process according to claim 1, wherein the salts formed are separated off in step d) by means of filtration.

5. The process according to claim 4, wherein the salts formed are separated off in step d) in the presence of a filter aid.

## Revendications

1. Procédé de traitement de polyétheralcools, qui ont été préparés par fixation par addition, catalysée de manière basique, d'oxyde d'éthylène et d'oxyde de propylène sur des substances de départ à fonction H et qui présentent une fraction d'oxyde d'éthylène dans la chaîne de polyéther supérieure à 20 % en poids, par rapport au poids des oxydes d'alkylène mis en oeuvre, comprenant les étapes
a) de neutralisation du polyétheralcool avec un acide, à la suite de la fixation par addition des oxydes d'alkylène,
b) d'addition d'au moins un agent d'absorption,
c) d'élimination d'eau et de composés aisément volatils dans le polyétheralcool,
d) d'élimination des sels formés et de l'agent d'absorption dans le polyétheralcool,
**caractérisé en ce que**, comme acide dans l'étape a), on met en oeuvre de l'acide phosphorique en une quantité de 56 à 98 % de la quantité stoechiométrique, dans l'étape b), on met en oeuvre l'agent d'absorption en une quantité de 0,05 à 5 % en poids, par rapport au polyétheralcool, et, au cours de l'étape c), on ajoute au polyétheralcool au moins un hydroxyde de métal alcalin, un hydroxyde de métal alcalino-terreux ou une amine en une quantité de 0,001 à 0,5 % en poids, par rapport au poids du polyétherol, le procédé étant commencé avec les étapes a) et/ou b).

2. Procédé suivant la revendication 1, **caractérisé en ce que** l'agent d'absorption dans l'étape b) est choisi parmi le groupe contenant de la cellulose, des échangeurs d'ions, des bentonites et des silicates.

3. Procédé suivant la revendication 1, **caractérisé en ce que** l'addition de l'hydroxyde de métal alcalin, de l'hydroxyde de métal alcalino-terreux et/ou de l'amine dans l'étape c) a lieu de préférence à une teneur en eau dans le polyétheralcool dans une gamme entre 0,1 et 0,5 % en poids.

4. Procédé suivant la revendication 1, **caractérisé en ce que** la séparation des sels formés a lieu dans l'étape d) au moyen d'une filtration.

5. Procédé suivant la revendication 4, **caractérisé en ce que** la séparation des sels formés a lieu dans l'étape d) en présence d'un adjuvant de filtration.
